# EUROPEAN PATENT SPECIFICATION

(11) **EP 3 018 046 B1**
(45) Date of publication and mention of the grant of the patent: **11.01.2017**
(21) Application number: 15178941.9
(22) Date of filing: 29.07.2015
(51) Int. Cl.: B62J 17/00, B62J 25/00, B62K 11/10

(54) **STRADDLED VEHICLE**
IM GRÄTSCHSITZ FAHRBARES FAHRZEUG
VÉHICULE À CALIFOURCHON

(30) Priority: 06.11.2014 JP 2014226062
(43) Date of publication of application: 11.05.2016
(73) Proprietor: Yamaha Hatsudoki Kabushiki Kaisha, Iwata-shi, Shizuoka 438-8501 (JP)
(72) Inventor: Ohzono, Gen, Shizuoka-ken, Shizuoka 438-8501 (JP)
(74) Representative: Moreland, David

(56) References cited:
- EP-A1- 2 644 488
- JP-A- 2002 173 071
- TW-A- 201 429 778
- US-A1- 2005 269 799

## Description

### FIELD OF INVENTION

The present invention relates to a straddled vehicle.

### BACKGROUND TO INVENTION

Straddled vehicles are known in the art. Such a vehicle typically includes: a first seat portion on which a rider sits; a second seat portion which is disposed behind the first seat portion and on which a pillion passenger sits; a flat footboard on which the rider puts their feet; footrests on which the pillion passenger puts their feet; and an under-seat cover disposed under the first seat portion. The flat footboard includes rearward extensions extending toward the footrests for the pillion passenger through regions laterally outward of the under-seat cover in a plan view. Each rearward extension is thin and thus has low rigidity. When getting on or off the vehicle, the rider and the pillion passenger may put their feet on the rearward extension, applying a load to the rearward extension. To cope with such a load, it is desirable to increase the rigidity of the rearward extensions.

As disclosed in JP 2002-173071 A (HONDA MOTOR CO LTD), one conceivable solution may be to increase the rigidity of rearward extensions of a flat footboard of a straddled vehicle by enlarging the rearward extensions outward in a width direction of the vehicle. Unfortunately, the rearward extensions enlarged outward in the width direction of the vehicle may reduce the banking angle of the straddled vehicle. Another conceivable solution may be to increase the rigidity of the rearward extensions by enlarging the rearward extensions inward in the width direction of the vehicle. However, a power unit may be disposed inward of the rearward extensions in the width direction of the vehicle. This means that the rearward extensions enlarged inward in the width direction of the vehicle disadvantageously may reduce a maintenance space for the power unit.

It is an object of at least one embodiment of at least one aspect of the present invention to obviate or at least mitigate one or more problems or disadvantages in the prior art.

### SUMMARY OF INVENTION

Various aspects of the present invention are defined in the independent claims. Some preferred features are defined in the dependent claims.

Preferred embodiments of the present invention may provide a straddled vehicle that may have a sufficiently large banking angle, may allow a sufficiently large maintenance space for a power unit, and/or may include a flat footboard whose rearward extension may have high rigidity.

According to an aspect of the present invention there is provided a straddled vehicle comprising:
a seat including
a first seat portion on which a rider sits, and
a second seat portion on which a pillion passenger sits, the second seat portion being disposed behind the first seat portion;
a flat footboard disposed forward and downward relative to the first seat portion, the flat footboard including a first footrest on which the rider puts their foot or feet;
an under-seat cover at least partially disposed under the first seat portion, the under-seat cover being connected to a rear edge of the first footrest;
a power unit at least partially disposed behind the under-seat cover;
at least one side cover disposed below the second seat portion and behind the under-seat cover in a side view of the vehicle, the side cover being a component separate from the under-seat cover; and
at least one second footrest on which the pillion passenger puts their foot, the second footrest being disposed rearward relative to a front end of the under-seat cover, and downward relative to the second seat portion,
the flat footboard further including at least one rearward extension passing through a region below the under-seat cover in the side view of the vehicle, passing through a region laterally outward of the under-seat cover in a plan view of the vehicle, and extending rearward toward the second footrest,
the side cover including a downward extension extending downward toward the flat footboard (34), characterised by:
   the downward extension passing through a region laterally outward of the rearward extension and being connected to the rearward extension.

The downward extension of the side cover of the straddled vehicle passes through the region laterally outward of the rearward extension of the flat footboard, and is connected to the rearward extension. More specifically, the downward extension may be disposed laterally outward of the rearward extension, so that the rearward extension may be covered with the downward extension. This may prevent the rider and the pillion passenger from putting their feet on the rearward extension when they get on or off the vehicle. The rearward extension is connected to the downward extension and may hang on and/or be supported by the side cover. Supporting the rearward extension with the side cover in this manner may increase the rigidity of the rearward extension. This means that the rearward extension may not have to be enlarged outward in a width direction of the vehicle to increase the rigidity of the rearward extension. Thus, the straddled vehicle may have a sufficiently large banking angle. Furthermore, the rearward extension may not have to be enlarged inward in the width direction of the vehicle to increase the rigidity of the rearward extension. This may allow a sufficiently large maintenance space for the power unit.

The first footrest may include a first footrest surface on which the rider may put their foot or feet. The downward extension may pass through the region laterally outward of the rearward extension, and may be connected to the flat footboard at a position forward relative to the rearward extension and below, e.g. directly below or underneath, the first footrest surface.

The downward extension of the side cover may be connected to the flat footboard at the position forward relative to the rearward extension and below, e.g. directly below or underneath, the first footrest surface, so that the flat footboard may hang on and/or be supported by the side cover. This arrangement may support the flat footboard with the side cover at the position forward relative to the rearward extension and below the first footrest surface, which may thus increase the rigidity of the first footrest. This arrangement may also increase the rigidity of the rearward extension located behind the first footrest.

The straddled vehicle may further include: a body frame supporting the first seat portion and the second seat portion; and at least one bracket supported by the body frame. The bracket may be provided with the second footrest. The flat footboard may further include at least one bracket cover extending rearward from the rearward extension, and may be disposed in front of and above the bracket.

The pillion passenger may put their foot on the bracket cover when trying to put their foot on the second footrest. In that case, a load may be applied to the rearward extension located in front of the bracket cover. However, the rearward extension may be connected to the downward extension and may hang on and/or be supported by the side cover, so that the rearward extension may have high rigidity. This may prevent deformation of the rearward extension caused by the load.

The bracket may be provided with a retaining hole. The flat footboard may further include at least one retained piece extending inward in a width direction of the vehicle from the bracket cover, and may be retained in the retaining hole.

This may prevent deformation of the bracket cover even when the pillion passenger may put their foot on the bracket cover. Consequently, a load resulting from the deformation of the bracket cover may be prevented from being applied to the rearward extension located in front of the bracket cover.

The retained piece may include a retained portion, which may upwardly urge an upper peripheral edge of the retaining hole of the bracket.

The retained portion of the flat footboard may upwardly urge the upper peripheral edge of the retaining hole. Thus, this may prevent deformation of the bracket cover in an up-down direction even when the pillion passenger puts their foot on the bracket cover. Consequently, a load resulting from the deformation of the bracket cover in the up-down direction may be prevented from being applied to the rearward extension located in front of the bracket cover.

The flat footboard may further include: an upper flat footboard which may include the rearward extension and the bracket cover; and a lower flat footboard which may be disposed under the upper flat footboard and may be connected to the upper flat footboard. The lower flat footboard may be disposed at least in front of and below or lower than the bracket.

This may prevent mud and/or water thrown up during running of the vehicle from splashing onto the second footrest.

The rearward extension may be disposed inward relative to the bracket cover in a width direction of the vehicle.

This may allow the rider to place their foot on the ground more easily than when the rearward extension is disposed outward relative to the bracket cover in the width direction of the vehicle.

A portion of the downward extension located forward relative to the rearward extension may decrease in up-down dimension as this portion of the downward extension extends forward.

The downward extension of the side cover may require no fastener, such as a bolt, at a position forward relative to the rearward extension. Thus, the downward extension may decrease in the up-down dimension as the downward extension extends forward. This may enable the rearward extension to hang on and/or be supported by the side cover while allowing a space for other members to be disposed around a front end of the downward extension.

The flat footboard may further include at least one fixation member fixing the side cover. The fixation member may include: a first fixation portion that may be located forward relative to the second footrest; a second fixation portion that may be located rearward relative to the first fixation portion, and forward relative to the second footrest; and a third fixation portion that may be located rearward relative to the second footrest.

The side cover may be fixed to the flat footboard at three or more positions in the vicinity of the second footrest. This may increase the rigidity of the periphery of the rearward extension located in front of the second footrest.

The first fixation portion may be provided under the rearward extension.

The side cover may be fixed to the flat footboard at the first fixation portion provided under the rearward extension. Thus, the rearward extension may be supported by the side cover also from under the rearward extension. Consequently, the rearward extension may have high rigidity.

Various preferred embodiments of the present invention may provide a straddled vehicle that has a sufficiently large banking angle, which may allow a sufficiently large maintenance space for a power unit, and may include a flat footboard whose rearward extension has high rigidity.

Features described in relation to any of the above aspects may also be applicable to any of the other above aspects. Features described above and/or below individually and/or in combination in relation to any of the above aspects may be jointly or individually and/or separably applicable to any other of the above aspects. Apparatus features corresponding to those described above and/or below in relation to a method and also method features corresponding to the use, assembly and fabrication of any apparatus features described above and/or below are also intended as falling within the scope of the present invention.

### BRIEF DESCRIPTION OF DRAWINGS

An embodiment of the present invention will now be described, by way of example only, with reference to the accompanying drawings, which are:
- **Figure 1**: a left side view of a motorcycle according to an embodiment of the present invention;
- **Figure 2**: a partial left side view of the motorcycle;
- **Figure 3**: a perspective view of a body frame of the motorcycle;
- **Figure 4**: a plan view of the body frame of the motorcycle;
- **Figure 5**: a partial plan view of the motorcycle;
- **Figure 6**: a perspective view of an upper flat footboard of the motorcycle of Figures 1 to 5;
- **Figure 7**: a plan view of the upper flat footboard;
- **Figure 8**: a partially enlarged perspective view of the upper flat footboard;
- **Figure 9**: a partial perspective view of the motorcycle;
- **Figure 10**: a partial left side view of the motorcycle;
- **Figure 11**: a cross-sectional view taken along the line XI-XI of Figure 10;
- **Figure 12**: a cross-sectional view taken along the line XII-XII of Figure 10;
- **Figure 13**: a cross-sectional view taken along the line XIII-XIII of Figure 10;
- **Figure 14**: a cross-sectional view taken along the line XIV-XIV of Figure 10; and
- **Figure 15**: a cross-sectional view taken along the line XV-XV of Figure 10.

### DETAILED DESCRIPTION OF DRAWINGS

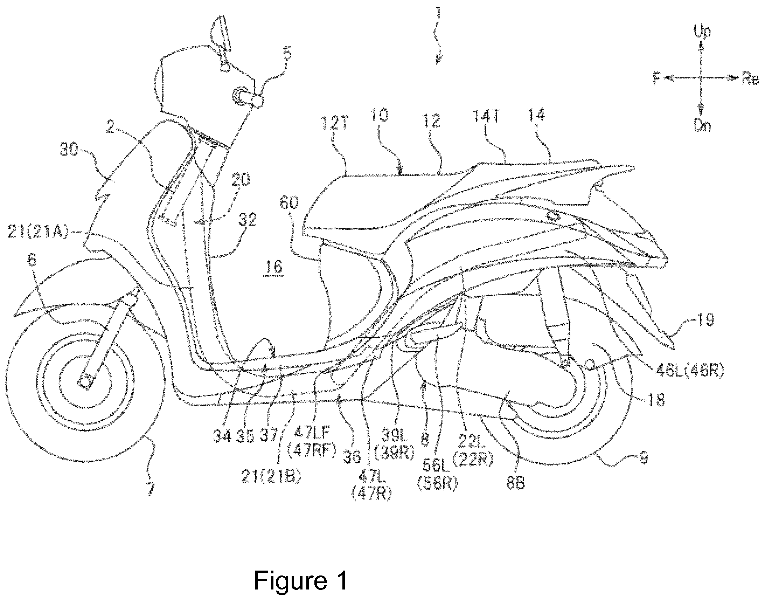

Hereinafter, preferred embodiments of the present invention will be described. As illustrated in Figure 1, a straddled vehicle according to the present preferred embodiment is a "scooter type" motorcycle 1. It is to be noted that the straddled vehicle according to the present invention is not limited to a scooter type motorcycle, but may be any other type of motorcycle. For example, the straddled vehicle may be a vehicle other than a motorcycle, such as a motor tricycle or an all-terrain vehicle (ATV). As used herein, the term "straddled vehicle" refers to a vehicle that a rider straddles when riding on the vehicle.

Unless otherwise noted, the terms "front", "rear", "right", "left", "up", and "down" respectively refer to front, rear, right, left, up, and down with respect to a rider sitting on a first seat portion 12 of the motorcycle 1 in the following description. The terms "up" and "down" respectively refer to a vertically upward direction and a vertically downward direction when the motorcycle 1 is stationary on a horizontal plane. Reference signs "F", "Re", "R", "L", "Up", and "Dn" in the drawings respectively represent front, rear, right, left, up, and down.

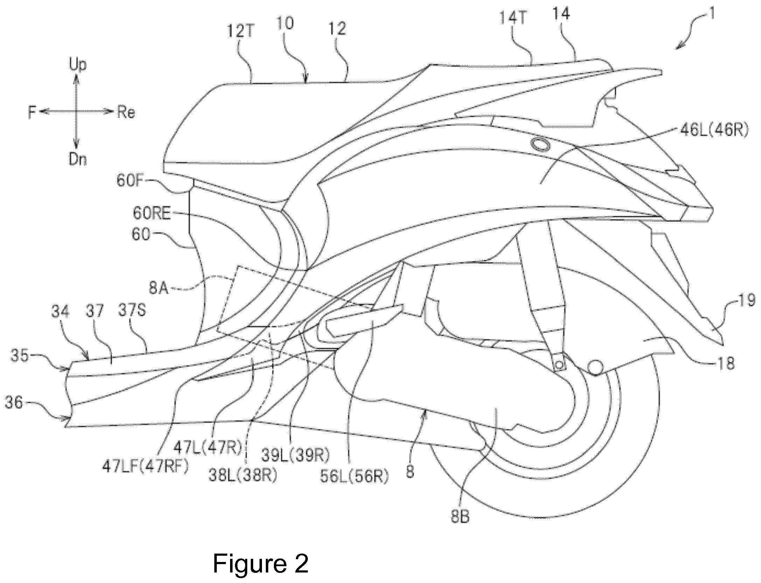

As illustrated in Figure 1, the motorcycle 1 preferably includes: a head pipe 2; a body frame 20 fixed to the head pipe 2; a seat 10 supported by the body frame 20; a front wheel 7; and a rear wheel 9. The head pipe 2 supports a steering shaft (not illustrated). A handlebar 5 is attached to an upper portion of the steering shaft. A front fork 6 is connected to a lower portion of the steering shaft. The front fork 6 supports the front wheel 7. The motorcycle 1 preferably further includes a power unit 8. The power unit 8 preferably includes: an internal combustion engine 8A (see Figure 2); and a transmission case 8B (see Figure 2) housing a V-belt type continuously variable transmission (not illustrated). A front end portion of the power unit 8 is supported by the body frame 20, so that the power unit 8 is swingable. A rear end portion of the power unit 8 is connected with the rear wheel 9. The rear wheel 9 is disposed below the seat 10. A rear fender 18 is disposed over the rear wheel 9. A mud guard 19 is disposed above the rear fender 18. The mud guard 19 is supported by the body frame 20.

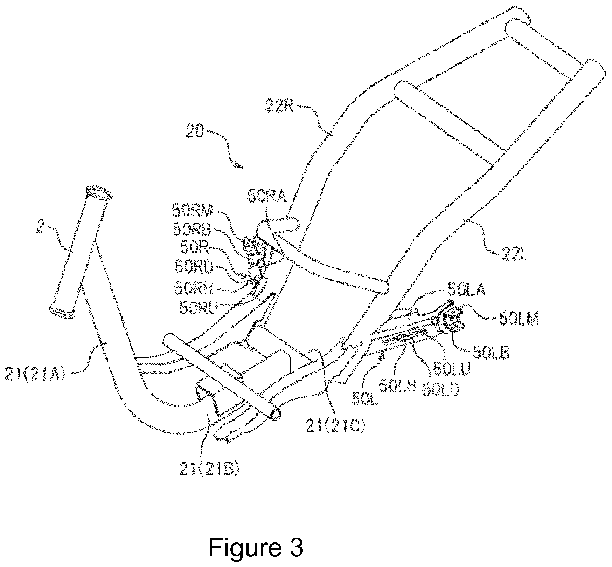

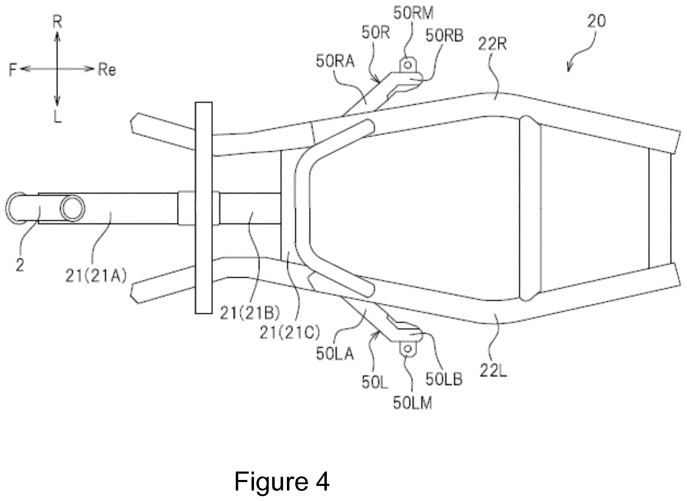

As illustrated in Figure 1, the body frame 20 preferably includes: a main frame 21 extending rearward from the head pipe 2; a left seat frame 22L extending rearward from the main frame 21; and a right seat frame 22R extending rearward from the main frame 21. The main frame 21 preferably includes: a front frame 21A extending obliquely downward and rearward from the head pipe 2; a lower frame 21 B extending rearward from a lower end portion of the front frame 21A; and a rear frame 21C (see Figure 3) extending in a width direction of the vehicle from a rear end portion of the lower frame 21 B. As illustrated in Figure 3, the left seat frame 22L extends obliquely upward and rearward from a left end portion of the rear frame 21C. The right seat frame 22R extends obliquely upward and rearward from a right end portion of the rear frame 21C. As illustrated in Figure 4, the right seat frame 22R is disposed laterally rightward of the left seat frame 22L. As illustrated in Figure 1, a recess 16 is defined behind the front frame 21A, over the lower frame 21B, and in front of the right and left seat frames 22R and 22L in a side view of the vehicle.

As illustrated in Figure 4, the motorcycle 1 (see Figure 1) preferably further includes a left bracket 50L and a right bracket 50R that are supported by the body frame 20. The left bracket 50L is connected to the left seat frame 22L. The left bracket 50L is provided with a second left footrest 56L (see Figure 1), which will be described below. The left bracket 50L preferably includes: a first left portion 50LA extending obliquely leftward and rearward from the left seat frame 22L; and a second left portion 50LB extending rearward from the first left portion 50LA. As illustrated in Figure 3, the first left portion 50LA is provided with a retaining hole 50LH elongated in a front-rear direction of the vehicle. The retaining hole 50LH is oriented in a right-left direction of the vehicle. The second left portion 50LB is provided with an attachment member 50LM to which the second left footrest 56L is attached. As illustrated in Figure 4, the right bracket 50R is connected to the right seat frame 22R. The right bracket 50R is provided with a second right footrest 56R (see Figure 1). The right bracket 50R preferably includes: a first right portion 50RA extending obliquely rightward and rearward from the right seat frame 22R; and a second right portion 50RB which extends rearward from the first right portion 50RA. As illustrated in Figure 3, the first right portion 50RA is provided with a retaining hole 50RH elongated in the front-rear direction of the vehicle. The retaining hole 50RH is oriented in the right-left direction of the vehicle. The second right portion 50RB is provided with an attachment member 50RM to which the second right footrest 56R is attached.

As illustrated in Figure 1, the seat 10 preferably includes: the first seat portion 12 on which the rider sits; and a second seat portion 14 on which a pillion passenger sits. The second seat portion 14 is disposed behind the first seat portion 12. An upper surface 12T of the first seat portion 12 is located downward relative to an upper surface 14T of the second seat portion 14. The first and second seat portions 12 and 14 are supported by the body frame 20. More specifically, the first and second seat portions 12 and 14 are supported by the right and left seat frames 22R and 22L.

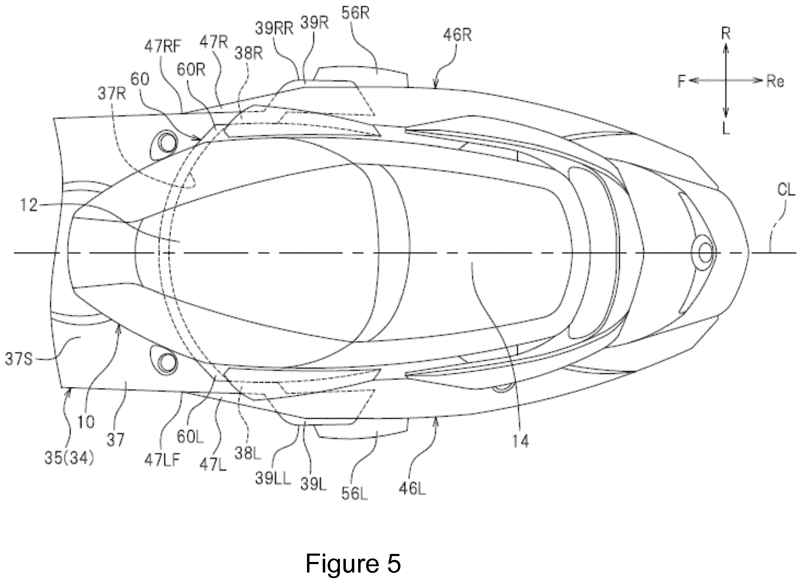

As illustrated in Figure 1, the motorcycle 1 preferably further includes a front cover 30, an inner panel 32, a flat footboard 34, an under-seat cover 60, a left side cover 46L, and a right side cover 46R. The front cover 30 is disposed in front of the head pipe 2 and the front frame 21A. The inner panel 32 is disposed behind the head pipe 2 and the front frame 21A. The flat footboard 34 is disposed at least above the lower frame 21 B. The under-seat cover 60 is disposed under, e.g. directly under or underneath, the seat 10. The left side cover 46L is disposed laterally leftward of the left seat frame 22L. The right side cover 46R is disposed laterally rightward of the right seat frame 22R (see also Figure 5). The under-seat cover 60, the left side cover 46L, and the right side cover 46R are separate components and thus separable from each other.

As illustrated in Figure 1, the flat footboard 34 is disposed forward relative to the first seat portion 12. The flat footboard 34 is disposed downward relative to, e.g. lower than, the first seat portion 12. The flat footboard 34 preferably includes: an upper flat footboard 35 at least partially disposed above the lower frame 21B; and a lower flat footboard 36 at least partially disposed below the lower frame 21 B. The lower flat footboard 36 is disposed under, i.e. directly under or underneath, the upper flat footboard 35. The lower flat footboard 36 is disposed at least in front of and below the right and left brackets 50R and 50L (see Figure 3). The lower flat footboard 36 is connected to the upper flat footboard 35.

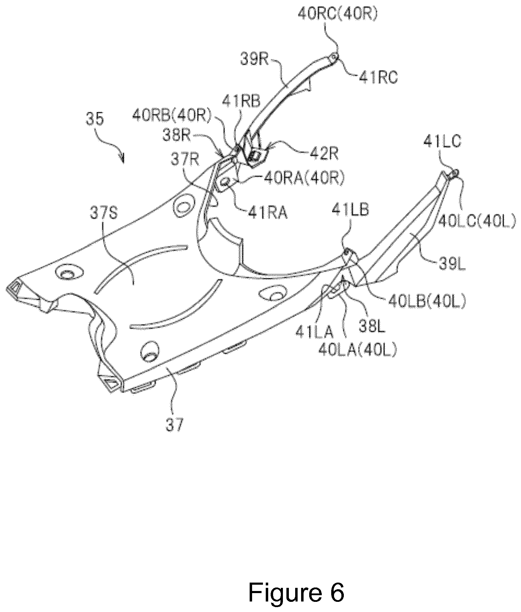

As illustrated in Figure 2, the flat footboard 34 preferably further includes a first footrest 37 on which the rider puts his or her foot or feet. More specifically, as illustrated in Figure 6, the upper flat footboard 35 preferably includes the first footrest 37. The first footrest 37 preferably includes a first footrest surface 37S. The rider puts his or her foot or feet on the first footrest surface 37S.

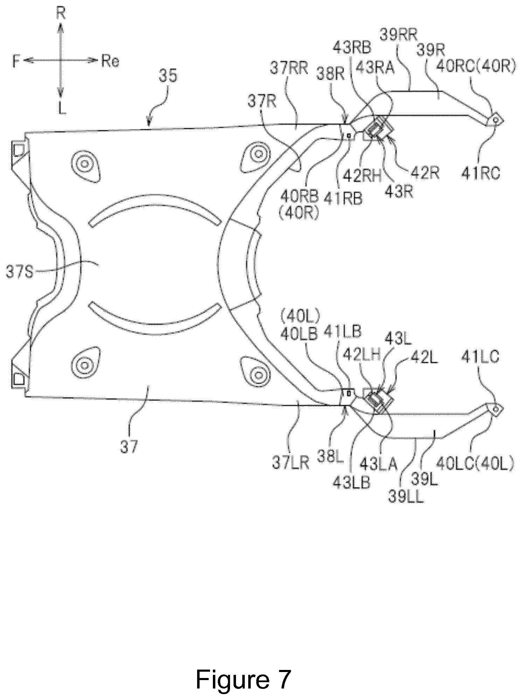

As illustrated in Figure 2, the flat footboard 34 preferably further includes a first rearward extension 38L, and a second rearward extension 38R. More specifically, as illustrated in Figure 7, the upper flat footboard 35 preferably includes the first rearward extension 38L, and the second rearward extension 38R. The second rearward extension 38R is disposed rightward of the first rearward extension 38L. The first rearward extension 38L extends rearward from the first footrest 37. More specifically, the first rearward extension 38L extends rearward from a left rear portion 37LR of the first footrest 37 toward the second left footrest 56L (see Figure 1). The second rearward extension 38R extends rearward from the first footrest 37. More specifically, the second rearward extension 38R extends rearward from a right rear portion 37RR of the first footrest 37 toward the second right footrest 56R (see Figure 5). As illustrated in Figure 2, the first rearward extension 38L passes through a region below, e.g. directly under or underneath, the under-seat cover 60 in the side view of the vehicle. The second rearward extension 38R passes through a region below, e.g. directly under or underneath, the under-seat cover 60 in the side view of the vehicle. As illustrated in Figure 5, the first rearward extension 38L passes through a region laterally outward of the under-seat cover 60 in a plan view of the vehicle. More specifically, the first rearward extension 38L passes through a region laterally leftward of the under-seat cover 60 in the plan view of the vehicle. The second rearward extension 38R passes through a region laterally outward of the under-seat cover 60 in the plan view of the vehicle. More specifically, the second rearward extension 38R passes through a region laterally rightward of the under-seat cover 60 in the plan view of the vehicle.

As illustrated in Figure 1, the flat footboard 34 preferably further includes a left bracket cover 39L and a right bracket cover 39R. More specifically, as illustrated in Figure 7, the upper flat footboard 35 preferably includes the left bracket cover 39L and the right bracket cover 39R. The left bracket cover 39L extends rearward from the first rearward extension 38L. The left bracket cover 39L is disposed leftward relative to the first rearward extension 38L. A left end 39LL of the left bracket cover 39L is located leftward relative to the first rearward extension 38L. The left bracket cover 39L is disposed in front of and above the left bracket 50L (see Figure 4). The right bracket cover 39R extends rearward from the second rearward extension 38R. The right bracket cover 39R is disposed rightward relative to the second rearward extension 38R. A right end 39RR of the right bracket cover 39R is located rightward relative to the second rearward extension 38R. The right bracket cover 39R is disposed in front of and above, e.g. directly above or overhead of, the right bracket 50R (see Figure 4).

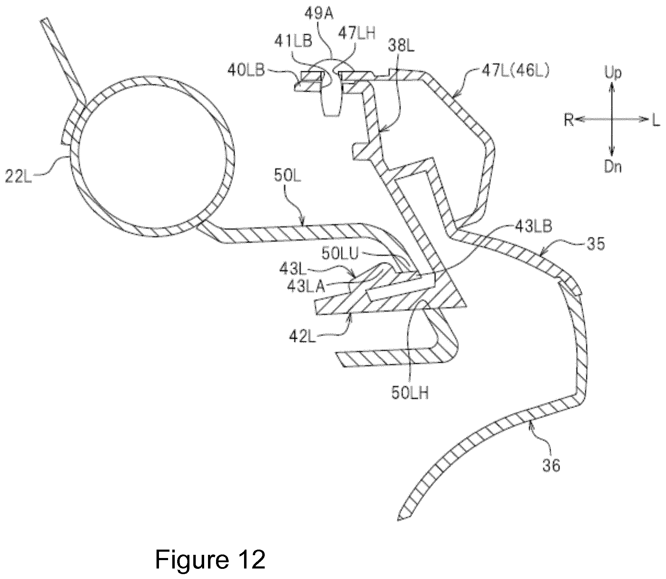

As illustrated in Figure 7, the upper flat footboard 35 preferably includes a left retained piece 42L and a right retained piece 42R. The left retained piece 42L extends inward in the width direction of the vehicle from the left bracket cover 39L. In other words, the left retained piece 42L extends rightward from the left bracket cover 39L. The left retained piece 42L is inserted into the retaining hole 50LH (see Figure 3) of the left bracket 50L (see also Figure 12). The left retained piece 42L is retained in the retaining hole 50LH. The left retained piece 42L is in contact with an upper peripheral edge 50LU (see Figure 3) and a lower peripheral edge 50LD (see Figure 3) of the retaining hole 50LH, and thus is retained in the retaining hole 50LH. The left retained piece 42L preferably includes a left retained portion 43L. The left retained portion 43L upwardly urges the upper peripheral edge 50LU of the retaining hole 50LH of the left bracket 50L. The left retained portion 43L preferably includes a first section 43LA and a second section 43LB. The dimension of the first section 43LA in an up-down direction is greater than that of the second section 43LB in the up-down direction. The first section 43LA is disposed rightward relative to the second section 43LB. The left retained piece 42L is provided with a through hole 42LH passing therethrough in the up-down direction. The through hole 42LH overlaps with part of the left retained portion 43L in the plan view of the vehicle. When the left retained piece 42L is inserted into the retaining hole 50LH, the left retained portion 43L deforms downward. The second section 43LB of the left retained portion 43L is in contact with the upper peripheral edge 50LU of the retaining hole 50LH.

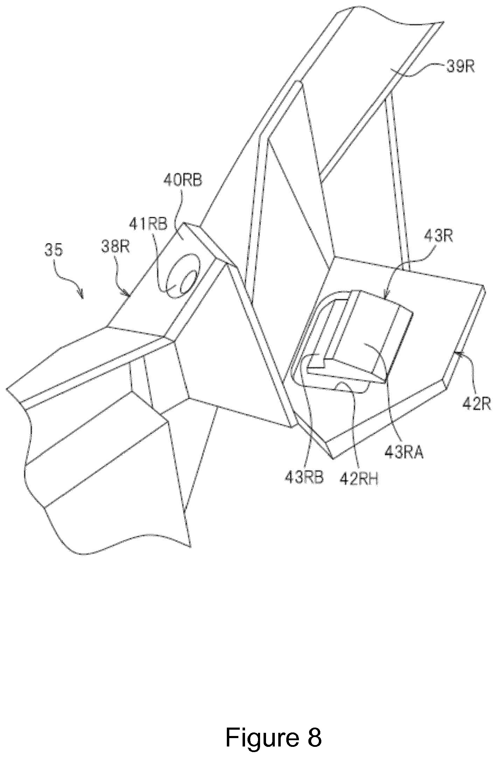

As illustrated in Figure 7, the right retained piece 42R extends inward in the width direction of the vehicle from the right bracket cover 39R. In other words, the right retained piece 42R extends leftward from the right bracket cover 39R. The right retained piece 42R is inserted into the retaining hole 50RH (Figure 3) of the right bracket 50R. The right retained piece 42R is retained in the retaining hole 50RH. The right retained piece 42R is in contact with an upper peripheral edge 50RU (see Figure 3) and a lower peripheral edge 50RD (see Figure 3) of the retaining hole 50RH, and thus retained in the retaining hole 50RH. As illustrated in Figure 8, the right retained piece 42R preferably includes a right retained portion 43R. The right retained portion 43R upwardly urges the upper peripheral edge 50RU of the retaining hole 50RH of the right bracket 50R. As illustrated in Figure 8, the right retained portion 43R preferably includes a first section 43RA and a second section 43RB. The dimension of the first section 43RA in the up-down direction is greater than that of the second section 43RB in the up-down direction. The first section 43RA is disposed leftward relative to the second section 43RB. The right retained piece 42R is provided with a through hole 42RH passing therethrough in the up-down direction. As illustrated in Figure 7, the through hole 42RH overlaps with part of the right retained portion 43R in the plan view of the vehicle. When the right retained piece 42R is inserted into the retaining hole 50RH, the right retained portion 43R deforms downward. The second section 43RB of the right retained portion 43R is in contact with the upper peripheral edge 50RU of the retaining hole 50RH.

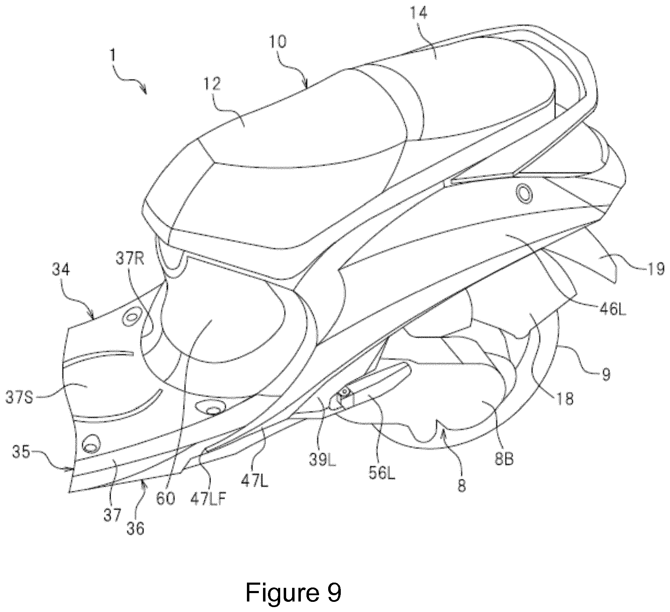

As illustrated in Figure 1, at least a portion of the under-seat cover 60 is disposed under, e.g. directly under or underneath, the first seat portion 12. As illustrated in Figure 5, a left end portion 60L of the under-seat cover 60 is disposed leftward of the first seat portion 12. A right end portion 60R of the under-seat cover 60 is disposed rightward of the first seat portion 12. The right and left end portions 60R and 60L of the under-seat cover 60 do not overlap with the first seat portion 12 in the plan view of the vehicle. As illustrated in Figure 9, the under-seat cover 60 is connected to a rear edge 37R (see also Figure 6) of the first footrest 37. As illustrated in Figure 1, the power unit 8 is disposed behind the under-seat cover 60. Note that the power unit 8 is only required to be at least partially disposed behind the under-seat cover 60. As illustrated in Figure 2, part of the under-seat cover 60 overlaps with part of the internal combustion engine 8A of the power unit 8 in the side view of the vehicle.

As illustrated in Figure 2, the left side cover 46L is disposed behind the under-seat cover 60 in the side view of the vehicle. The left side cover 46L is disposed below, e.g. directly below or underneath, the second seat portion 14. The right side cover 46R is disposed behind the under-seat cover 60 in the side view of the vehicle. The right side cover 46R is disposed below, e.g. directly below or underneath, the second seat portion 14.

As illustrated in Figure 1, the left side cover 46L preferably includes a first downward extension 47L extending downward toward the flat footboard 34. A portion of the first downward extension 47L located forward relative to the first rearward extension 38L decreases in the up-down dimension as this portion of the first downward extension 47L extends forward. A front end 47LF of the first downward extension 47L is disposed downward relative to, e.g. lower than, directly under or underneath, the under-seat cover 60. The front end 47LF is disposed forward relative to a rear end 60RE of the under-seat cover 60. The front end 47LF is disposed downward relative to, e.g. lower than, the second left footrest 56L. The front end 47LF is disposed forward relative to the second left footrest 56L. The front end 47LF is disposed downward relative to, e.g. lower than, directly under or underneath, the first footrest surface 37S. The front end 47LF is disposed downward relative to, e.g. lower than, the mud guard 19. The front end 47LF is disposed downward relative to, e.g. lower than, the rear fender 18.

The right side cover 46R preferably includes a second downward extension 47R extending downward toward the flat footboard 34. A portion of the second downward extension 47R located forward relative to the second rearward extension 38R decreases in the up-down dimension as this portion of the second downward extension 47R extends forward. A front end 47RF of the second downward extension 47R is disposed downward relative to, e.g. lower than, directly under or underneath, the under-seat cover 60. The front end 47RF is disposed forward relative to the rear end 60RE of the under-seat cover 60. The front end 47RF is disposed downward relative to, e.g. lower than, the second right footrest 56R. The front end 47RF is disposed forward relative to the second right footrest 56R. The front end 47RF is disposed downward relative to, e.g. lower than, directly under or underneath, the first footrest surface 37S. The front end 47RF is disposed downward relative to, e.g. lower than, the mud guard 19. The front end 47RF is disposed downward relative to, e.g. lower than, the rear fender 18.

As illustrated in Figure 5, the first downward extension 47L passes through a region laterally outward of the first rearward extension 38L. More specifically, the first downward extension 47L passes through a region laterally leftward of the first rearward extension 38L. The second downward extension 47R passes through a region laterally outward of the second rearward extension 38R. More specifically, the second downward extension 47R passes through a region laterally rightward of the second rearward extension 38R. As illustrated in Figure 2, the first downward extension 47L is connected to the first rearward extension 38L. More specifically, the first downward extension 47L is connected to the first rearward extension 38L so that a laterally outward portion of the first rearward extension 38L is covered with the first downward extension 47L. The second downward extension 47R is connected to the second rearward extension 38R. More specifically, the second downward extension 47R is connected to the second rearward extension 38R so that a laterally outward portion of the second rearward extension 38R is covered with the second downward extension 47R.

As illustrated in Figure 2, the first downward extension 47L is connected to the lower flat footboard 36 at a position located forward relative to the first rearward extension 38L and below, e.g. directly below or underneath, the first footrest surface 37S. In other words, the first downward extension 47L is connected to the lower flat footboard 36 at a position located downward relative to, e.g. lower than, directly under or underneath, the first rearward extension 38L. Alternatively, the first downward extension 47L may be connected to the upper flat footboard 35. The second downward extension 47R is connected to the lower flat footboard 36 at a position located forward relative to the second rearward extension 38R and below, e.g. directly below or underneath, the first footrest surface 37S. In other words, the second downward extension 47R is connected to the lower flat footboard 36 at a position located downward relative to, e.g. lower than, directly under or underneath, the second rearward extension 38R. Alternatively, the second downward extension 47R may be connected to the upper flat footboard 35.

As illustrated in Figure 2, the motorcycle 1 preferably includes the second right and left footrests 56R and 56L on which the pillion passenger puts his or her feet. The second right and left footrests 56R and 56L are disposed rearward relative to the under-seat cover 60. More specifically, the second right and left footrests 56R and 56L are disposed rearward relative to a front end 60F of the under-seat cover 60. The second right and left footrests 56R and 56L are disposed downward relative to, e.g. lower than or under, the second seat portion 14.

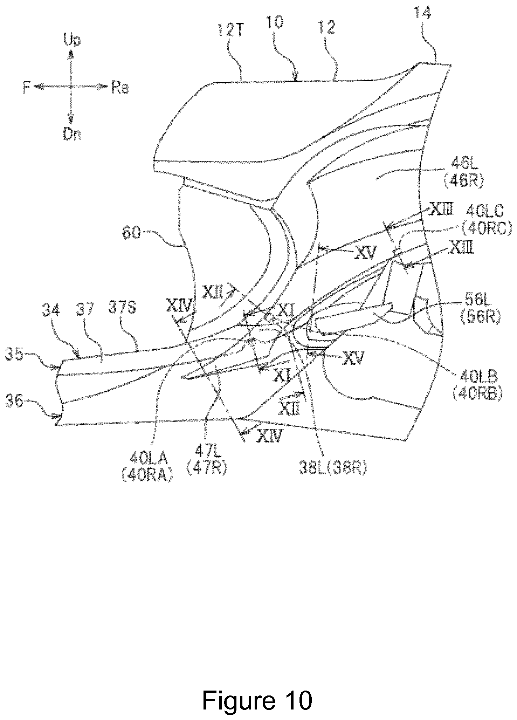

As illustrated in Figure 6, the upper flat footboard 35 preferably further includes a left fixation member 40L. The left fixation member 40L fixes the left side cover 46L (see Figure 2). The left fixation member 40L preferably includes a first left fixation portion 40LA, a second left fixation portion 40LB, and a third left fixation portion 40LC. The first left fixation portion 40LA is provided under, e.g. directly under or underneath, the first rearward extension 38L. The second left fixation portion 40LB is provided on the first rearward extension 38L. The third left fixation portion 40LC is provided at a rear portion of the left bracket cover 39L. The first left fixation portion 40LA is provided with a first left through hole 41 LA. The second left fixation portion 40LB is provided with a second left through hole 41 LB. The third left fixation portion 40LC is provided with a third left through hole 41 LC. As illustrated in Figure 10, the first left fixation portion 40LA is located in front of the second left footrest 56L. The second left fixation portion 40LB is located rearward relative to the first left fixation portion 40LA. The second left fixation portion 40LB is located upward relative to or higher than, the first left fixation portion 40LA. The second left fixation portion 40LB is located forward relative to the second left footrest 56L. The third left fixation portion 40LC is located rearward relative to the second left footrest 56L. The third left fixation portion 40LC is located upward relative to or higher than, the second left footrest 56L. The third left fixation portion 40LC is located upward relative to or higher than, the second left fixation portion 40LB.

As illustrated in Figure 6, the upper flat footboard 35 preferably further includes a right fixation member 40R. The right fixation member 40R fixes the right side cover 46R (see Figure 2). The right fixation member 40R preferably includes a first right fixation portion 40RA, a second right fixation portion 40RB, and a third right fixation portion 40RC. The first right fixation portion 40RA is provided under, e.g. directly under or beneath, the second rearward extension 38R. The second right fixation portion 40RB is provided on the second rearward extension 38R. The third right fixation portion 40RC is provided at a rear portion of the right bracket cover 39R. The first right fixation portion 40RA is provided with a first right through hole 41 RA. The second right fixation portion 40RB is provided with a second right through hole 41 RB. The third right fixation portion 40RC is provided with a third right through hole 41RC. As illustrated in Figure 10, the first right fixation portion 40RA is located in front of the second right footrest 56R. The second right fixation portion 40RB is located rearward relative to the first right fixation portion 40RA. The second right fixation portion 40RB is located upward relative to or higher than, the first right fixation portion 40RA. The second right fixation portion 40RB is located forward relative to the second right footrest 56R. The third right fixation portion 40RC is located rearward relative to the second right footrest 56R. The third right fixation portion 40RC is located upward relative to or higher than the second right footrest 56R. The third right fixation portion 40RC is located upward relative to or higher than the second right fixation portion 40RB.

The right and left side covers 46R and 46L are symmetrical with respect to a vehicle center line CL (see Figure 5), so that the right side cover 46R is fixed to the flat footboard 34 in the same manner as the left side cover 46L is fixed to the flat footboard 34. Accordingly, how the right side cover 46R is fixed to the flat footboard 34 will not be described in detail below.

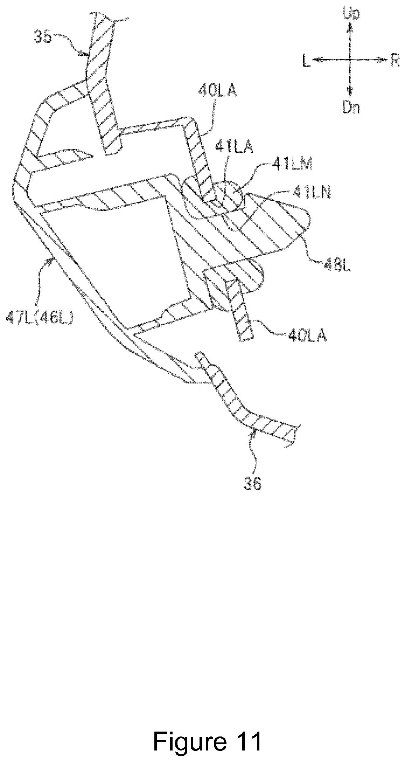

As illustrated in Figure 11, an elastic member 41 LM is disposed into the first left through hole 41 LA of the first left fixation portion 40LA. The elastic member 41 LM is provided with a through hole 41 LN. The left side cover 46L preferably includes a protrusion 48L inserted into the through hole 41 LN and thus fixed to the elastic member 41 LM. The protrusion 48L is provided on the first downward extension 47L. Note that the elastic member 41 LM does not necessarily have to be disposed into the first left through hole 41 LA. When the elastic member 41 LM is not disposed into the first left through hole 41 LA, the protrusion 48L is inserted into the first left through hole 41 LA and thus fixed to the first left fixation portion 40LA.

As illustrated in Figure 12, the first downward extension 47L of the left side cover 46L (see also Figure 2) is provided with a first through hole 47LH. A first fastener 49A is inserted into the second left through hole 41 LB of the second left fixation portion 40LB, and the first through hole 47LH of the first downward extension 47L. Thus, the left side cover 46L is fixed to the upper flat footboard 35 with the first fastener 49A. More specifically, the first downward extension 47L is retained by the second left fixation portion 40LB with the first fastener 49A.

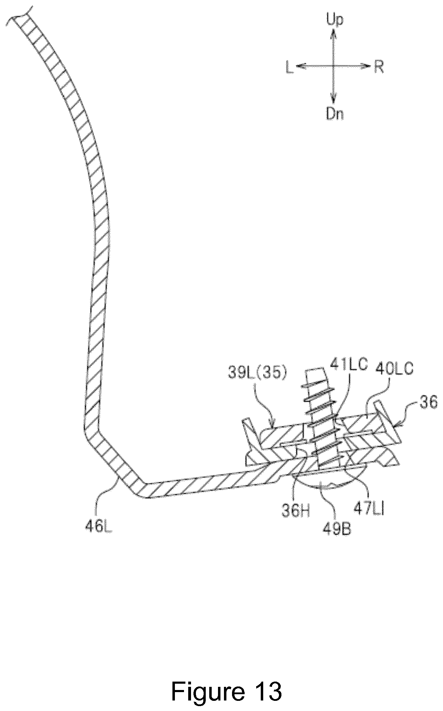

As illustrated in Figure 13, the left side cover 46L is provided with a second through hole 47LI. The lower flat footboard 36 is provided with a first through hole 36H. A second fastener 49B is inserted into: the third left through hole 41 LC of the third left fixation portion 40LC; the first through hole 36H of the lower flat footboard 36; and the second through hole 47LI of the left side cover 46L. Thus, the left side cover 46L is fixed to the lower flat footboard 36 and the upper flat footboard 35 with the second fastener 49B. In other words, the left side cover 46L is fixed to the third left fixation portion 40LC with the second fastener 49B. Although the left side cover 46L is fixed to the third left fixation portion 40LC with the lower flat footboard 36 located therebetween in the present preferred embodiment, the left side cover 46L may alternatively be directly fixed to the third left fixation portion 40LC.

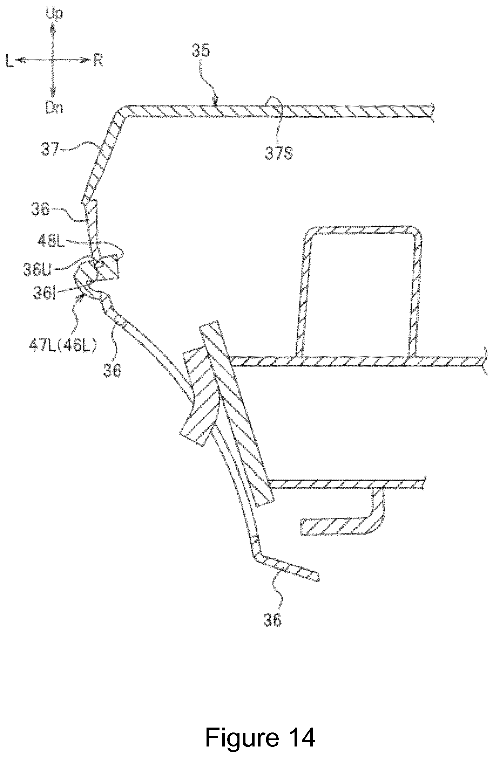

As illustrated in Figure 14, the lower flat footboard 36 is provided with a second through hole 36I. The second through hole 36I passes through the lower flat footboard 36 in the right-left direction. The second through hole 36I is located downward relative to the first footrest surface 37S. The second through hole 36I is located forward relative to the first rearward extension 38L (see Figure 2). The second through hole 36I is located forward relative to the first left fixation portion 40LA (see Figure 10). The left side cover 46L preferably includes a retained portion 48L retained in the second through hole 36I. The retained portion 48L is provided on the first downward extension 47L. The retained portion 48L is inserted into the second through hole 36I and retained by an upper peripheral edge 36U of the second through hole 36I. Since the retained portion 48L is retained in the second through hole 36I, the first downward extension 47L is fixed to the lower flat footboard 36.

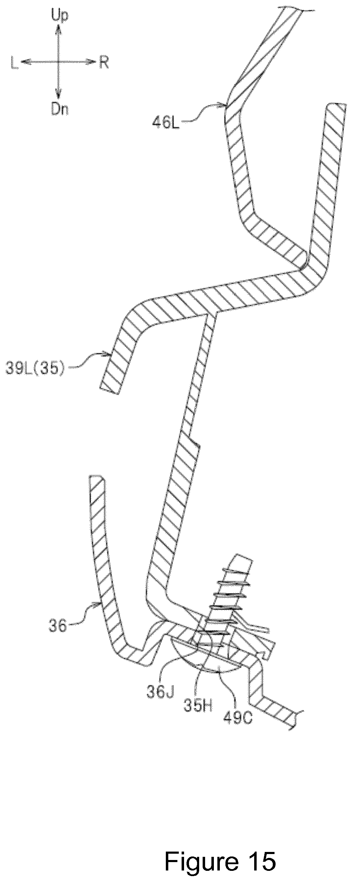

As illustrated in Figure 15, the lower flat footboard 36 is provided with a third through hole 36J. The upper flat footboard 35 is provided with a through hole 35H. A third fastener 49C is inserted into the third through hole 36J of the lower flat footboard 36, and the through hole 35H of the upper flat footboard 35. Thus, the upper and lower flat footboards 35 and 36 are fixed to each other with the third fastener 49C.

As illustrated in Figure 2, the first downward extension 47L of the left side cover 46L of the motorcycle 1 passes through the region laterally outward of the first rearward extension 38L of the upper flat footboard 35, and is connected to the first rearward extension 38L as described above. More specifically, the first downward extension 47L is disposed laterally outward of the first rearward extension 38L, so that the first rearward extension 38L is covered with the first downward extension 47L. This prevents the rider and the pillion passenger from putting their feet on the first rearward extension 38L when they get on or off the vehicle. The first rearward extension 38L is connected to the first downward extension 47L and thus hangs on and/or is supported by the left side cover 46L. Supporting the first rearward extension 38L with the left side cover 46L in this manner increases the rigidity of the first rearward extension 38L. This means that the first rearward extension 38L does not have to be enlarged outward in the width direction of the vehicle to increase the rigidity of the first rearward extension 38L. Thus, the motorcycle 1 has a sufficiently large banking angle. Furthermore, the first rearward extension 38L does not have to be enlarged inward in the width direction of the vehicle to increase the rigidity of the first rearward extension 38L. This allows a sufficiently large maintenance space for the power unit 8.

As illustrated in Figure 2, the first downward extension 47L of the left side cover 46L of the motorcycle 1 according to the present preferred embodiment is connected to the lower flat footboard 36 at the position forward relative to the first rearward extension 38L and below, e.g. lower than, directly under or underneath, the first footrest surface 37S, so that the lower flat footboard 36 hangs on and/or is supported by the left side cover 46L. This arrangement supports the lower flat footboard 36 with the left side cover 46L at the position forward relative to the first rearward extension 38L and below the first footrest surface 37S, thus increasing the rigidity of the first footrest 37. This arrangement also increases the rigidity of the first rearward extension 38L located behind the first footrest 37.

As illustrated in Figure 6, the upper flat footboard 35 of the motorcycle 1 according to the present preferred embodiment preferably includes the left bracket cover 39L extending rearward from the first rearward extension 38L, and disposed in front of and above the left bracket 50L (see Figure 3). The pillion passenger may put his or her foot on the left bracket cover 39L when trying to put his or her foot on the second left footrest 56L. In that case, a load may be applied to the first rearward extension 38L located in front of the left bracket cover 39L. However, the first rearward extension 38L is connected to the first downward extension 47L and hangs on the left side cover 46L, so that the first rearward extension 38L has high rigidity.

This prevents deformation of the first rearward extension 38L caused by the load.

As illustrated in Figure 7, the upper flat footboard 35 of the motorcycle 1 according to the present preferred embodiment preferably includes the left retained piece 42L extending inward in the width direction of the vehicle from the left bracket cover 39L, and inserted into the retaining hole 50LH (see Figure 3). This prevents deformation of the left bracket cover 39L even when the pillion passenger puts his or her foot on the left bracket cover 39L. Consequently, a load resulting from the deformation of the left bracket cover 39L is prevented from being applied to the first rearward extension 38L located in front of the left bracket cover 39L.

As illustrated in Figure 12, the left retained portion 43L of the flat footboard 34 of the motorcycle 1 according to the present preferred embodiment upwardly urges the upper peripheral edge 50LU of the retaining hole 50LH (see also Figure 3). This prevents deformation of the left bracket cover 39L in the up-down direction even when the pillion passenger puts his or her foot on the left bracket cover 39L. Consequently, a load resulting from the deformation of the left bracket cover 39L in the up-down direction is prevented from being applied to the first rearward extension 38L located in front of the left bracket cover 39L.

The lower flat footboard 36 of the motorcycle 1 according to the present preferred embodiment is disposed at least in front of and below the left bracket 50L. This prevents mud and/or water thrown up during running of the vehicle from splashing onto the second left footrest 56L.

As illustrated in Figure 7, the first rearward extension 38L of the flat footboard 34 of the motorcycle 1 according to the present preferred embodiment is disposed inward relative to the left bracket cover 39L in the width direction of the vehicle. This allows the rider to place his or her foot on the ground more easily than when the first rearward extension 38L is disposed outward relative to the left bracket cover 39L in the width direction of the vehicle.

Since the body frame 20 of the motorcycle 1 according to the present preferred embodiment supports the power unit 8 so that the power unit 8 is swingable, the body frame 20 is limited in shape. If an attempt is made to support the first rearward extension 38L of the upper flat footboard 35 with the body frame 20, the body frame 20 is unfortunately complicated in structure. To cope with such a problem, the first rearward extension 38L is connected to the first downward extension 47L and thus hangs on and/or is supported by the left side cover 46L in the present preferred embodiment. This arrangement increases the rigidity of the first rearward extension 38L without complicating the structure of the body frame 20.

As illustrated in Figure 2, the first downward extension 47L of the left side cover 46L of the motorcycle 1 according to the present preferred embodiment requires no fastener, such as a bolt, at a position forward relative to the first rearward extension 38L. Thus, the dimension of the first downward extension 47L in the up-down direction of the vehicle decreases as the first downward extension 47L extends forward. This enables the first rearward extension 38L to hang on and/or be supported by the left side cover 46L while allowing a space for other members to be disposed around the front end 47LF of the first downward extension 47L.

As illustrated in Figure 10, the left side cover 46L of the motorcycle 1 according to the present preferred embodiment is fixed to the upper flat footboard 35 at three or more positions, i.e., the first, second and third left fixation portions 40LA, 40LB, and 40LC located in the vicinity of the second left footrest 56L. This increases the rigidity of the periphery of the first rearward extension 38L located in front of the second left footrest 56L.

As illustrated in Figure 10, the left side cover 46L of the motorcycle 1 according to the present preferred embodiment is fixed to the upper flat footboard 35 at the first left fixation portion 40LA provided under the first rearward extension 38L. Thus, the first rearward extension 38L is supported by the left side cover 46L also from under the first rearward extension 38L. Consequently, the first rearward extension 38L has high rigidity.

It will be appreciated that the term straddled vehicle or motor vehicle used herein, and as used in the art, is meant to include the following terms also used in the art:
straddle-type vehicle saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

### REFERENCE SIGNS LIST

- 8: power unit
- 12: first seat portion
- 14: second seat portion
- 34: flat footboard
- 35: upper flat footboard
- 36: lower flat footboard
- 37: first footrest
- 37S: first footrest surface
- 38L: first rearward extension
- 38R: second rearward extension
- 46L: left side cover
- 46R: right side cover
- 47L: first downward extension
- 47R: second downward extension
- 50L: left bracket
- 50R: right bracket
- 56L: second left footrest
- 56R: second right footrest
- 60: under-seat cover

## Claims

1. A straddled vehicle (1) comprising:
a seat (10) including
a first seat portion (12) on which a rider sits, and
a second seat portion (14) on which a pillion passenger sits, the
second seat portion (14) being disposed behind the first seat portion (12);
a flat footboard (34) disposed forward and downward relative to the first seat portion (12), the flat footboard (34) including a first footrest (37) on which the rider puts their foot or feet;
an under-seat cover (60) at least partially disposed under the first seat portion (12), the under-seat cover (60) being connected to a rear edge (37R) of the first footrest (37);
a power unit (8) at least partially disposed behind the under-seat cover (60);
at least one side cover (46L, 46R) disposed below the second seat portion (14) and behind the under-seat cover (60) in a side view of the vehicle, the side cover (46L, 46R) being a component separate from the under-seat cover (60); and
at least one second footrest (56L, 56R) on which the pillion passenger puts their foot, the second footrest (56L, 56R) being disposed rearward relative to a front end (60F) of the under-seat cover (60), and downward relative to the second seat portion (14),
the flat footboard (34) further including at least one rearward extension (38L, 38R) passing through a region below the under-seat cover (60) in the side view of the vehicle, passing through a region laterally outward of the under-seat cover (60) in a plan view of the vehicle, and extending rearward toward the second footrest (56L, 56R),
the side cover (46L, 46R) including a downward extension (47L, 47R) extending downward toward the flat footboard (34), **characterised by**:
the downward extension (47L, 47R) passing through a region laterally outward of the rearward extension (38L, 38R) and being connected to the rearward extension (38L, 38R).

2. The straddled vehicle (1) according to claim 1, wherein
the first footrest (37) includes a first footrest surface (37S) on which the rider puts their foot or feet, and
the downward extension (47L, 47R) passes through the region laterally outward of the rearward extension (38L, 38R), and is connected to the flat footboard (34) at a position forward relative to the rearward extension (38L, 38R) and below the first footrest surface (37S).

3. The straddled vehicle (1) according to claim 1 or 2, further comprising:
a body frame (20) supporting the first seat portion (12) and the second seat portion (14); and
at least one bracket (50L, 50R) supported by the body frame (20), the bracket (50L, 50R) being provided with the second footrest (56L, 56R),
wherein the flat footboard (34) further includes at least one bracket cover (39L, 39R) extending rearward from the rearward extension (38L, 38R), and disposed in front of and above the bracket (50L, 50R).

4. The straddled vehicle (1) according to claim 3, wherein
the bracket (50L, 50R) is provided with a retaining hole (50LH, 50RH), and
the flat footboard (34) further includes at least one retained piece (42L, 42R) extending inward in a width direction of the vehicle from the bracket cover (39L, 39R), and retained in the retaining hole (50LH, 50RH).

5. The straddled vehicle (1) according to claim 4, wherein the retained piece (42L, 42R) includes a retained portion (43L, 43R) upwardly urging an upper peripheral edge (50LU, 50RU) of the retaining hole (50LH, 50RH) of the bracket (50L, 50R).

6. The straddled vehicle (1) according to any one of claims 3 to 5, wherein
the flat footboard (34) further includes:
an upper flat footboard (35) including the rearward extension (38L, 38R) and the bracket cover (39L, 39R); and
a lower flat footboard (36) disposed under the upper flat footboard (35) and connected to the upper flat footboard (35), and
the lower flat footboard (36) is disposed at least in front of and below the bracket (50L, 50R).

7. The straddled vehicle (1) according to claim 3, wherein the rearward extension (38L, 38R) is disposed inward relative to the bracket cover (39L, 39R) in a width direction of the vehicle.

8. The straddled vehicle (1) according to any one of claims 1 to 7, wherein a portion of the downward extension (47L, 47R) located forward relative to the rearward extension (38L, 38R) decreases in up-down dimension as this portion of the downward extension (47L, 47R) extends forward.

9. The straddled vehicle (1) according to any one of claims 1 to 8, wherein
the flat footboard (34) further includes at least one fixation member (40L, 40R) fixing the side cover (46L, 46R), and
the fixation member (40L, 40R) includes:
a first fixation portion (40LA, 40RA) located forward relative to the second footrest (56L, 56R);
a second fixation portion (40LB, 40RB) located rearward relative to the first fixation portion (40LA, 40RA), and forward relative to the second footrest (56L, 56R); and
a third fixation portion (40LC, 40RC) located rearward relative to the second footrest (56L, 56R).

10. The straddled vehicle (1) according to claim 9, wherein the first fixation portion (40LA, 40RA) is provided under the rearward extension (38L, 38R).

## Patentansprüche

1. Reitsitz-Fahrzeug (1), das Folgendes umfasst:
einen Sitz (10), der Folgendes einschließt:
einen ersten Sitzabschnitt (12), auf dem ein Fahrer sitzt, und
einen zweiten Sitzabschnitt (14), auf dem ein Beifahrer sitzt, wobei der zweite Sitzabschnitt (14) hinter dem ersten Sitzabschnitt (12) angeordnet ist,
ein flaches Trittbrett (34), das im Verhältnis zu dem ersten Sitzabschnitt (12) nach vorn und nach unten angeordnet ist, wobei das flache Trittbrett (34) eine erste Fußraste (37) einschließt, auf die der Fahrer seinen Fuß oder seine Füße stellt,
eine Untersitzabdeckung (60), die wenigstens teilweise unter dem ersten Sitzabschnitt (12) angeordnet ist, wobei die Untersitzabdeckung (60) mit einer hinteren Kante (37R) der ersten Fußraste (37) verbunden ist,
eine Antriebseinheit (8), die wenigstens teilweise hinter der Untersitzabdeckung (60) angeordnet ist,
wenigstens eine Seitenabdeckung (46L, 46R), die in einer Seitenansicht des Fahrzeugs unter dem zweiten Sitzabschnitt (14) und hinter der Untersitzabdeckung (60) angeordnet ist, wobei die Seitenabdeckung (46L, 46R) eine von der Untersitzabdeckung (60) gesonderte Komponente ist, und
wenigstens eine zweite Fußraste (56L, 56R), auf die der Beifahrer seinen Fuß stellt, wobei die zweite Fußraste (56L, 56R) im Verhältnis zu einem vorderen Ende (60F) der Untersitzabdeckung (60) nach hinten und im Verhältnis zu dem zweiten Sitzabschnitt (14) nach unten angeordnet ist,
wobei das flache Trittbrett (34) ferner wenigstens eine Rückwärtsverlängerung (38L, 38R) einschließt, die in der Seitenansicht des Fahrzeugs durch einen Bereich unterhalb der Untersitzabdeckung (60) hindurchgeht, wobei sie in einer Draufsicht des Fahrzeugs durch einen Bereich, seitlich außerhalb der Untersitzabdeckung (60), hindurchgeht und sich nach hinten zu der zweiten Fußraste (56L, 56R) hin erstreckt,
wobei die Seitenabdeckung (46L, 46R) eine Abwärtsverlängerung (47L, 47R) einschließt, die sich nach unten zu dem flachen Trittbrett (34) hin erstreckt, **dadurch gekennzeichnet, dass**:
die Abwärtsverlängerung (47L, 47R) durch einen Bereich, seitlich außerhalb der Rückwärtsverlängerung (38L, 38R), hindurchgeht und mit der Rückwärtsverlängerung (38L, 38R) verbunden ist.

2. Reitsitz-Fahrzeug (1) nach Anspruch 1, wobei
die erste Fußraste (37) eine erste Fußrastenfläche (37S) einschließt, auf die der Fahrer seinen Fuß oder seine Füße stellt, und
die Abwärtsverlängerung (47L, 47R) durch den Bereich, seitlich außerhalb der Rückwärtsverlängerung (38L, 38R), hindurchgeht und an einer Position, im Verhältnis zu der Rückwärtsverlängerung (38L, 38R) nach vorn, und unterhalb der ersten Fußrastenfläche (37S) mit dem flachen Trittbrett (34) verbunden ist.

3. Reitsitz-Fahrzeug (1) nach Anspruch 1 oder 2, das ferner Folgendes umfasst:
einen Aufbaurahmen (20), der den ersten Sitzabschnitt (12) und den zweiten Sitzabschnitt (14) stützt, und
wenigstens eine Stütze (50L, 50R), die durch den Aufbaurahmen (20) gestützt wird, wobei die Stütze (50L, 50R) mit der zweiten Fußraste (56L, 56R) versehen ist,
wobei das flache Trittbrett (34) ferner wenigstens eine Stützenabdeckung (39L, 39R) einschließt, die sich von der Rückwärtsverlängerung (38L, 38R) nach hinten erstreckt und vor und oberhalb der Stütze (50L, 50R) angeordnet ist.

4. Reitsitz-Fahrzeug (1) nach Anspruch 3, wobei
die Stütze (50L, 50R) mit einem Rückhalteloch (50LH, 50RH) versehen ist und das flache Trittbrett (34) ferner wenigstens ein zurückgehaltenes Stück (42L, 42R) einschließt, das sich in einer Breitenrichtung des Fahrzeugs von der Stützenabdeckung (39L, 39R) erstreckt und in dem Rückhalteloch (50LH, 50RH) zurückgehalten wird.

5. Reitsitz-Fahrzeug (1) nach Anspruch 4, wobei das zurückgehaltene Stück (42L, 42R) einen zurückgehaltenen Abschnitt (43L, 43R) einschließt, der eine obere Umfangskante (50LU, 50RU) des Rückhaltelochs (50LH, 50RH) der Stütze (50L, 50R) nach oben drängt.

6. Reitsitz-Fahrzeug (1) nach einem der Ansprüche 3 bis 5, wobei das flache Trittbrett (34) ferner Folgendes einschließt:
ein oberes flaches Trittbrett (35), das die Rückwärtsverlängerung (38L, 38R) und die Stützenabdeckung (39L, 39R) einschließt, und
ein unteres flaches Trittbrett (36), das unter dem oberen flachen Trittbrett (35) angeordnet und mit dem oberen flachen Trittbrett (35) verbunden ist, und
wobei das untere flache Trittbrett (36) wenigstens vor und unterhalb der Stütze (50L, 50R) angeordnet ist.

7. Reitsitz-Fahrzeug (1) nach Anspruch 3, wobei die Rückwärtsverlängerung (38L, 38R) in einer Breitenrichtung des Fahrzeugs im Verhältnis zu der Stützenabdeckung (39L, 39R) nach innen angeordnet ist.

8. Reitsitz-Fahrzeug (1) nach einem der Ansprüche 1 bis 7, wobei ein Abschnitt der Abwärtsverlängerung (47L, 47R), der im Verhältnis zu der Rückwärtsverlängerung (38L, 38R) nach vorn angeordnet ist, in der Aufwärts-Abwärts-Abmessung abnimmt, wenn sich dieser Abschnitt der Abwärtsverlängerung (47L, 47R) nach vorn erstreckt.

9. Reitsitz-Fahrzeug (1) nach einem der Ansprüche 1 bis 8, wobei das flache Trittbrett (34) ferner wenigstens ein Befestigungselement (40L, 40R) einschließt, das die Seitenabdeckung (46L, 46R) befestigt, und
das Befestigungselement (40L, 40R) Folgendes einschließt:
einen ersten Befestigungsabschnitt (40LA, 40RA), der im Verhältnis zu der zweiten Fußraste (56L, 56R) nach vorn angeordnet ist,
einen zweiten Befestigungsabschnitt (40LB, 40RB), der im Verhältnis zu dem ersten Befestigungsabschnitt (40LA, 40RA) nach hinten und im Verhältnis zu der zweiten Fußraste (56L, 56R) nach vorn angeordnet ist, und
einen dritten Befestigungsabschnitt (40LC, 40RC), der im Verhältnis zu der zweiten Fußraste (56L, 56R) nach hinten angeordnet ist.

10. Reitsitz-Fahrzeug (1) nach Anspruch 9, wobei der erste Befestigungsabschnitt (40LA, 40RA) unter der Rückwärtsverlängerung (38L, 38R) bereitgestellt wird.

## Revendications

1. Véhicule à enfourcher (1), comprenant :
un siège (10) englobant :
une première partie de siège (12) sur laquelle un motocycliste est assis ; et
une deuxième partie de siège (14) sur laquelle un passager est assis, la deuxième partie de siège (14) étant agencée derrière la première partie de siège (12) ;
un marchepied plat (34) agencé vers l'avant et vers le bas par rapport à la première partie de siège (22), le marchepied plat (34) englobant un premier repose-pied (37) sur lequel le motocycliste met son pied ou ses pieds ;
un couvercle de dessous du siège (60), agencé au moins en partie au-dessous de la première partie du siège (12), le couvercle de dessous du siège (60) étant connecté à un bord arrière (37R) du premier repose-pied (37) ;
une unité de puissance (8), agencée au moins en partie derrière le couvercle de dessous du siège (60) ;
au moins un couvercle latéral (46L, 46R) agencé au-dessous de la deuxième partie du siège (14) et derrière le couvercle de dessous du siège (60) dans une vue latérale du véhicule, le couvercle latéral (46L, 46R) constituant un composant séparé du couvercle de dessous du siège (60) ; et
au moins un deuxième repose-pied (56L, 56R) sur lequel le passager met son pied, le deuxième repose-pied (56L, 56R) étant agencé vers l'arrière par rapport à une extrémité avant (60F) du couvercle de dessous du siège (60), et vers le bas par rapport à la deuxième partie du siège (14) ;
le marchepied plat (34) englobant en outre au moins une extension arrière (38L, 38R) passant à travers une région située au-dessous du couvercle de dessous du siège (60) dans la vue latérale du véhicule, passant à travers une région située latéralement vers l'extérieur du couvercle de dessous du siège (60) dans une vue en plan du véhicule, et s'étendant vers l'arrière en direction du deuxième repose-pied (56L, 56R) ;
le couvercle latéral (46L, 46R) englobant une extension vers le bas (47L, 47R) s'étendant vers le bas en direction du marchepied plat (34), **caractérisé en ce que** :
l'extension vers le bas (47L, 47R) passe à travers une région située latéralement vers l'extérieur de l'extension arrière (38L, 38R) et est connectée à l'extension arrière (38L, 38R).

2. Véhicule à enfourcher (1) selon la revendication 1, dans lequel :
le premier repose-pied (37) englobe une première surface de repose-pieds (37S) sur laquelle le motocycliste met son pied ou ses pieds ; et
l'extension vers le bas (47L, 47R) passe à travers la région située latéralement vers l'extérieur de l'extension arrière (38L, 38R) et est connectée au marchepied plat (34) au niveau d'une position située vers l'avant par rapport à l'extension arrière (38L, 38R) et au-dessous de la surface du premier repose-pied (37S).

3. Véhicule à enfourcher (1) selon les revendications 1 ou 2, comprenant en outre :
un cadre de châssis (20) supportant la première partie du siège (12) et la deuxième partie du siège(14) ; et
au moins une console (50L, 50R) supportée par le cadre de châssis (20), la console (50L, 50R) comportant le deuxième repose-pied (56 L, 56R) ;
dans lequel le marchepied plat (34) englobe en outre au moins un couvercle de la console (39L, 39R) s'étendant vers l'arrière de l'extension arrière (38L, 38R) et agencé en face et au-dessus de la console (50L, 50R)

4. Véhicule à enfourcher (1) selon la revendication 3, dans lequel :
la console (50L, 50R) comporte un trou de retenue (50LH, 50RH) ; et
le marchepied plat (34) englobe en outre au moins une pièce retenue (42L, 42R) s'étendant vers l'intérieur dans une direction de la largeur du véhicule à partir du couvercle de la console (39L, 39R) et retenue dans le trou de retenue (50LH, 50RH).

5. Véhicule à enfourcher (1) selon la revendication 4, dans lequel la pièce retenue (42L, 42R) englobe une partie retenue (43L, 43R) poussant vers le haut un bord périphérique supérieur (50LU, 50RU) du trou de retenue (50LH, 50RH) de la console (50L, 50R).

6. Véhicule à enfourcher (1) selon l'une quelconque des revendications 3 à 5, dans lequel le marchepied plat (34) englobe en outre :
un marchepied supérieur plat (35) englobant l'extension arrière (38L, 38R) et le couvercle de la console (39L, 39R) ; et
un marchepied inférieur plat (36) agencé au-dessous du marchepied supérieur plat (35) et connecté au marchepied supérieur plat (35) ; et
le marchepied inférieur plat (36) est agencé au moins en face et au-dessous de la console (50L, 50R).

7. Véhicule à enfourcher (1) selon la revendication 3, dans lequel l'extension arrière (38L, 38R) est agencée vers l'intérieur par rapport au couvercle de la console (39L, 39R) dans une direction de la largeur du véhicule.

8. Véhicule à enfourcher (1) selon l'une quelconque des revendications 1 à 7, dans lequel une partie de l'extension vers le bas (47L, 47R) agencée vers l'avant par rapport à l'extension arrière (38L, 38R) a une dimension allant du haut vers le bas réduite lorsque cette partie de l'extension vers le bas (47L, 47R) s'étend vers l'avant.

9. Véhicule à enfourcher (1) selon l'une quelconque des revendications 1 à 8, dans lequel :
le marchepied plat (34) englobe en outre au moins un élément de fixation (40L, 40R) fixant le couvercle latéral (46L, 46R) ; et
l'élément de fixation (40L, 40R) englobe :
une première partie de fixation (40LA, 40RA) agencée vers l'avant par rapport au deuxième repose-pied (56 L, 56R) ;
une deuxième partie de fixation (40LB, 40RB) agencée vers l'arrière par rapport à la première partie de fixation (40LA, 40RA) et vers l'avant par rapport au deuxième repose-pied (56L, 56R) ; et
une troisième partie de fixation (40LC, 40RC) agencée vers l'arrière par rapport au deuxième repose-pied (56 L, 56R).

10. Véhicule à enfourcher (1) selon la revendication 9, dans lequel la première partie de fixation (40LA, 40RA) est agencée au-dessous de l'extension arrière (38L, 38R).
